# FASCICULE DE BREVET EUROPEEN

(11) **EP 1 227 273 B1**
(45) Date de publication et mention de la délivrance du brevet: **07.03.2007**
(21) Numéro de dépôt: 02290200.1
(22) Date de dépôt: 29.01.2002
(51) Int. Cl.: F16J 15/48, B65G 51/03, B60V 1/16

(54) **Procédé et dispositif d'étanchéité entre un élément fixe et un élément mobile linéairement par rapport à celui-ci**
Verfahren und Vorrichtung zur Abdichtung zwischen einem festem und einem linear beweglichen Teil
Method and sealing device between a fixed element and a linearly mobile one

(30) Priorité: 29.01.2001 FR 0101169
(43) Date de publication de la demande: 31.07.2002
(73) Titulaire: CONSTRUCTIONS INDUSTRIELLES DE LA MEDITERRANEE- CNIM, F-75008 Paris (FR)
(72) Inventeur: Ponsot, Bernard, 83500 La Seyne sur Mer (FR); Cortot, Bernard, 83220 Le Pradet (FR)
(74) Mandataire: Peaucelle, Chantal

(56) Documents cités:
- DE-B- 1 247 145
- US-A- 3 243 004
- US-A- 3 822 792

## Description

L'invention concerne un dispositif d'étanchéité entre un élément fixe et un élément mobile linéairement par rapport à celui-ci et permettant d'améliorer le contrôle du déplacement de l'élément mobile.

DE-1 247 145B montre un engin à coussin d'air comportant un dispositif d'étanchéité disposé entre les surfaces respectives de deux éléments, dont l'un est mobile linéairement dans une direction parallèle à la surface de l'autre élément qui est fixe. Ce dispositif d'étanchéité comprend au moins une jupe souple de section en forme de « U » renversé, dont la surface est continue, dont l'une des extrémités est fixée de manière continue et étanche sur la surface d'un des éléments, ladite jupe étant apte à être gonflée par un fluide pénétrant par l'ouverture du « U » et à présenter une épaisseur donnée et variable de joint d'étanchéité relative.

Ce dispositif d'étanchéité ne concerne qu'un moyen pour supporter l'engin. En effet, la jupe est fixée suivant le contour périphérique de l'élément et présente des sections transversales en opposition. La différence de pression du fluide entre l'intérieur de la jupe et l'extérieur ne peut donc créer aucun effort de motricité d'un élément par rapport à l'autre. Un autre moyen est prévu pour créer l'effort moteur.

On connaît aussi des dispositifs d'étanchéité dans le cas du déplacement d'un piston dans un cylindre, ou de tout objet cylindrique dans un tube de guidage concentrique et de grande longueur.

Le dispositif d'étanchéité est alors apte à assurer une étanchéité entre un premier fluide maintenu sous pression du côté amont du dispositif et un second fluide situé à une pression inférieure et du côté aval du dispositif, les côtés amont et aval du dispositif étant définis par rapport au sens de déplacement de l'élément mobile. Dans ce type d'application, contrairement à DE-1 247 145B, la différence de pression de part et d'autre du dispositif d'étanchéité à un effet moteur sur l'élément mobile.

Un exemple de tels dispositifs d'étanchéité connus se présente sous la forme de joints de type à lèvre en forme de « U » renversé, dont l'une des branches est ancrée dans une gorge réalisée dans la surface de l'élément fixe, l'autre branche étant libre de se déformer sous l'action de la pression s'exerçant du côté amont. Ainsi, l'extrémité de cette branche libre du joint à lèvres entre en contact avec la surface de l'élément mobile, assure alors certes l'étanchéité mais, par son frottement, perturbe la trajectoire de ce dernier, en abîme la surface extérieure et nécessite des changements fréquents.

Par ailleurs, l'épaisseur et la rigidité relativement importantes de ce type de joint, ne permettent pas une grande amplitude de déformation de sa branche libre en fonction des variations de pression exercées et des déplacements transversaux de l'élément mobile : ces déplacements transversaux sont ceux perpendiculaires à la trajectoire de l'élément mobile et relatifs par rapport à l'élément fixe.

Des ruptures de joints peuvent par ailleurs se produire.

Le problème posé est de réaliser un dispositif d'étanchéité évitant les inconvénients ci-dessus, résistant à de fortes pressions amont, surtout quand elles sont nécessaires pour assurer le mouvement linéaire de l'élément mobile, acceptant des déplacements relatifs et transversaux assez importants de l'élément mobile par rapport à l'élément fixe, d'au moins 40 % par rapport à la distance moyenne fixée en fonctionnement initial de base, sans perte significative de performances, tant dans sa vitesse de déplacement linéaire que dans les moyens mis en oeuvre pour assurer celle-ci et perturbant au minimum la trajectoire de l'élément mobile.

Ce dernier point est important pour les applications à des mobiles se déplaçant dans des tubes de guidage fixes, lorsque ces mobiles subissent des efforts externes en sortie de ces tubes.

Selon l'invention, un dispositif d'étanchéité disposé entre les surfaces respectives de deux éléments constitués par un objet cylindrique et un tube de guidage concentrique, l'objet cylindrique étant mobile linéairement dans une direction parallèle à la surface du tube de guidage qui est fixe, ce dispositif d'étanchéité étant en forme de « U » renversé dont l'une des branches est ancrée dans la surface de l'un des éléments et dont l'autre branche est libre de se déformer sous l'action de la pression s'exerçant en amont, est caractérisé en ce que : le dispositif comprend au moins une jupe souple de section en forme de « U » renversé, dont la surface est continue et dont l'une des extrémités est fixée de manière continue et étanche sur la surface d'un desdits éléments,ladite jupe étant de forme pseudotorique dans la direction perpendiculaire à l'extrémité de la branche du « U » dont l'extrémité est destinée à être fixée à l'un des éléments, la jupe étant apte à être gonflée par un fluide pénétrant par l'ouverture du « U » et à présenter une épaisseur donnée et variable de joint d'étanchéité relative, l'extrémité de la jupe étant disposée perpendiculairement à la direction de déplacement linéaire de l'élément mobile, et l'autre extrémité étant reliée à ladite surface dudit élément par des moyens de liaison.

L'invention concerne également un procédé d'étanchéité entre les surfaces respectives de deux éléments constitués par un objet cylindrique et un tube de guidage concentrique, l'objet cylindrique étant mobile linéairement dans une direction parallèle à la surface du tube de guidage qui est fixe,
procédé selon lequel on utilise un dispositif d'étanchéité en forme de « U » renversé dont l'une des branches est ancrée dans la surface de l'élément fixe et dont l'autre branche est libre de se déformer sous l'action de la pression s'exerçant en amont, ce dispositif d'étanchéité étant apte à assurer une étanchéité entre un premier fluide maintenu sous pression du côté amont du dispositif et un second fluide situé du côté aval à une pression inférieure, les côtés amont et aval étant définis par rapport au sens de déplacement linéaire de l'élément mobile, caractérisé en ce que :
- on réalise au moins une jupe souple de section en forme de « U » renversé dont la surface est continue,
- on fixe l'une des extrémités de ladite jupe de manière continue et étanche sur la surface de l'un des éléments fixe ou mobile,
- on dispose et fixe ladite extrémité de la jupe perpendiculairement à la direction de déplacement linéaire de l'élément mobile, et
- on relie l'autre extrémité de ladite jupe à ladite surface de l'un des éléments par des moyens de liaison aptes à laisser passer le premier fluide à l'intérieur de la forme en « U »,
ladite jupe étant de forme pseudotorique dans la direction perpendiculaire à l'extrémité de la branche du « U » dont l'extrémité est destinée à être fixée à l'un des éléments,
- on gonfle ladite jupe avec le premier fluide sous pression qui pénètre dans l'intérieur de la forme en « U » jusqu'à ce que cette jupe occupe une distance donnée, variable par rapport à la surface de l'élément qui lui fait face, et inférieure à la distance séparant les surfaces des éléments fixe et mobile, laquelle jupe assure une étanchéité relative entre lesdits éléments.

De préférence, on utilise comme premier et second fluides du gaz tel que de l'air, la jupe se comportant alors suivant le principe du coussin d'air et permettant un débit de fuite de gaz donné entre la membrane qui la constitue et l'élément vers lequel elle est gonflée, c'est-à-dire celui qui lui fait face par opposition à celui sur lequel elle est fixée.

Ce procédé d'étanchéité relative utilisant le principe de fonctionnement du coussin d'air est une application particulière de ce principe dont l'effet technique est surprenant, car il ne s'agit pas ici, en objectif principal, d'établir la sustentation d'un élément mobile sur un support fixe et qui s'y propulse au-dessus de celui-ci à une distance qui s'auto-régule en fonction de son poids et de la pression de gonflage de ses jupes : l'objet de la présente invention est différent puisqu'il s'agit d'obtenir une étanchéité relative donnée entre les surfaces d'un élément mobile et du support contre lequel il se déplace, en obturant l'espace qui les sépare et qui a une valeur donnée et fixée par d'autres critères que ceux de la pression et du poids, tels que les dimensions relatives des éléments fixe et mobile, comme pour un objet se déplaçant à l'intérieur d'un tube qui lui est concentrique et qui est supporté par d'autres moyens assurant son guidage.

Le résultat est un nouveau dispositif et procédé d'étanchéité entre un élément fixe et un élément mobile linéairement par rapport à celui-ci, répondant au problème posé et offrant des caractéristiques de mise en oeuvre très intéressantes qui permettent notamment d'améliorer le contrôle du déplacement de l'élément mobile.

En particulier, grâce au procédé d'étanchéité suivant l'invention utilisant le principe du coussin d'air, un tel dispositif est auto-adaptatif car il s'avère d'une manière surprenante que, si la surface de l'élément mobile s'éloigne, pour des raisons indépendantes du dispositif et de la pression qui le gonfle, de celle de l'élément fixe ou s'en rapproche, la jupe constituant le dispositif se déforme de telle façon que la distance correspondant à l'espace permettant la fuite du fluide amont vers le fluide aval, entre ladite jupe et l'élément qui lui fait face, reste constante.

Une telle disposition permet de supprimer les frottements entre l'élément fixe ou mobile et la Jupe, ce qui assure une plus grande tenue dans le temps de la jupe, et d'éviter tout risque de détérioration de là surface de l'élément qui lui fait face, tout en réduisant au minimum les risques de perturbations au niveau de la trajectoire de cet élément mobile.

De plus, la distance de fuite restant quasi constante, à pression constante, le débit de fuite du fluide amont l'est également et permet un meilleur contrôle de la pression de celui-ci.

D'autres avantages et particularités de l'invention résulteront de la description qui va suivre, donnée à titre d'exemples non limitatifs et faite en référence aux figures annexées dans lesquelles :
- la figure 1 est une vue schématique en coupe d'un dispositif selon l'invention disposé entre deux éléments, l'un mobile, l'autre fixe sur lequel est fixé ledit dispositif, sachant que ce dispositif pourrait également être porté par l'élément mobile ;
- la figure 2 est une vue schématique en élévation d'une réalisation particulière d'un dispositif selon l'invention tel que celui de la figure 1.

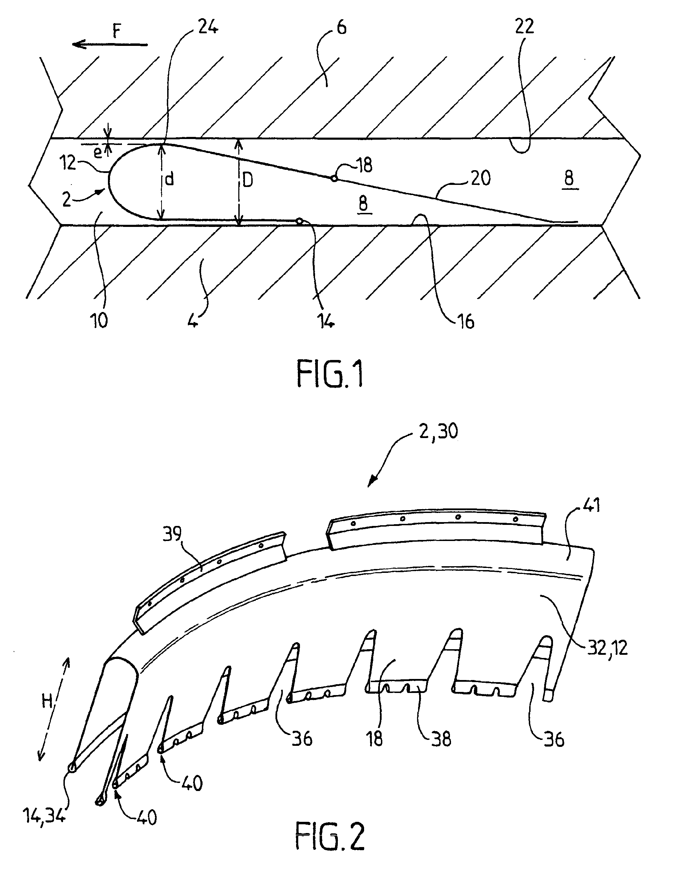

Les éléments communs aux figures 1 et 2 sont repérés par des références numériques identiques.

Sur la figure 1, on peut visualiser le dispositif d'étanchéité 2 selon l'invention. Celui-ci est disposé entre la surface d'un élément fixe 4 et celle d'un élément mobile 6 se déplaçant dans une seule direction, ce déplacement étant qualifié de linéaire, parallèlement à la surface 16 l'élément fixe 4, à une distance D de celui-ci et dans le sens repéré par la flèche F.

En amont du dispositif d'étanchéité 2 se trouve un premier fluide 8, de préférence du gaz tel que de l'air, sous une pression v s'exerçant sur l'élément mobile 6 et pouvant par ailleurs assurer son déplacement dans le sens de la flèche F.

En aval du dispositif d'étanchéité 2 se trouve un second fluide 10 à une pression P₂ inférieure à la pression P₁ et qui peut être un gaz tel que de l'air également.

Le dispositif d'étanchéité 2 représenté à là figure 1 comporte une jupe 12 de section en forme de "U" et dont la surface est continue.

La jupe 12 est en une matière présentant :
- d'une part, une grande résistance à la traction, dans toute direction tangente à sa surface, ladite traction étant provoquée par la différence de pressions P₁-P₂,
- d'autre part, une grande souplesse dans tout plan perpendiculaire à sa surface et coupant celle-ci afin de pouvoir la plier, permettant des déformations transversales pour que la jupe 12 puisse s'adapter à la variation de divers paramètres, notamment aux déplacements transversaux de l'élément mobile 6.

La matière utilisée pour la jupe 12 est de préférence un véritable composite préformé pour répondre à la conformation requise dans l'application, présentant une très bonne résistance aux efforts qui peuvent s'exercer.

Ce composite est réalisé en élastomère renforcé, la structure interne de renfort étant sous forme de fibres ou tissu, noyées et mouillées par le matériau élastomère monobloc dont les dimensions extérieures déterminent celles de la jupe, la structure interne étant disposée à des distances prédéterminées des dites dimensions extérieures.

La jupe 12 peut être réalisée en polymère, par exemple du polyuréthanne, ledit polymère étant de préférence renforcé, pour résister aux fortes traction.

La structure de renfort de la jupe 12 est en général constituée de fibres aramides.

Dans un mode de réalisation préféré, les fibres de la structure de renfort de la jupe 12 sont disposées dans le sens permettant de mieux absorber les efforts de traction, c'est-à-dire majoritairement suivant la direction d'application de ceux-ci.

L'épaisseur de la jupe 12 est choisie en fonction de la destination de l'application du dispositif d'étanchéité 2 selon l'invention.

Pour des pressions P₁ de l'ordre de 10⁶ Pa (10 bar) et une distance moyenne D entre les parois ou surfaces des éléments mobile 6 et fixe 4 de l'ordre de 80 mm, l'épaisseur de la jupe 12 est de préférence comprise entre 2 et 5 mm.

L'extrémité 14 de la jupe 12 est relise à la surface 16 de l'élément fixe 4 de manière continue et étanche. Cette fixation de l'extrémité 14 est telle que la surface de la jupe 12 y soit tangentielle à la surface de l'élément considéré, telle que la surface 16 de l'élément fixe 4 repéré sur les figures.

Cette liaison peut notamment être obtenue par un système de type bride réalisée par un talon réalisé à cette extrémité 14 de la jupe 12 et qui vient en butée contre tout rebord d'une gorge réalisée dans l'élément sur lequel on veut fixer ledit dispositif d'étanchéité 2.

L'autre extrémité 18 de la jupe 12 est reliée à cette même surface de l'élément considéré, telle que celle 16 de l'élément fixe 4, par l'intermédiaire d'une ou plusieurs bretelles de tenue 20, les bretelles de tenue 20 formant d'une part une surface discontinue à travers laquelle le premier fluide 8 pénètre dans l'ouverture en "U" de la jupe 12 pour la gonfler, et d'autre part un angle a avec ladite surface 16

De préférence, l'extrémité 14 de la jupe 12 est disposée perpendiculairement à la direction de déplacement linéaire de l'élément mobile 6.

Dan. le cas d'un élément mobile 6 de section circulaire se déplaçant dans un tube concentrique, la jupe 12 est de forme pseudotorique dans tout plan perpendiculaire à l'extrémité de la branche du "U", dont l'extrémité 14 est destinée à être fixée à l'élément fixe 4.

On va maintenant décrire le procédé d'étanchéité utilisant le dispositif 2 représenté à la figure 1, avec comme premier fluide 8 situé en amont du dispositif d'étanchéité 2 de gaz, tel que de l'air, et comme second fluide 10 situé en aval de ce même dispositif 2 ce même gaz.

Lorsque l'on applique une pression P₁ de gaz supérieure à la pression P₂ du fluide 10, la différence de pressions P₁ - P₂ qui s'exerce à l'intérieur des branches du "U" de la jupe 12 va faire gonfler ladite jupe 12 qui va occuper une distance "d" donnée et variable par rapport à la surface 16 l'élément fixe 4.

Sous l'action de ce différentiel de pressions P₁-P₂, la jupe 12 se gonfle donc entre la surface 16 de l'élément fixe 4 à laquelle la jupe 2 est fixée de manière continue et étanche, et la surface 22 de l'élément mobile 6.

Cependant, il s'avère que, dès que le différentiel de pressions P₁- P₂ atteint une valeur de quelques milliers de Pa (quelques dizaines de mbar), et bien que la distance D séparant la surface 16 de l'élément fixe 4 de la surface 22 de l'élément mobile 6·et préalablement fixée et définie par d'autres moyens, la distance d occupée par la jupe 12 selon l'invention par rapport à la surface 16 de l'élément fixe 4 est inférieure à D : la jupe 12 se comporte alors suivant le principe du coussin d'air, la partie 24 de la jupe 12 n'entre pas en contact avec l'élément mobile 6 et reste à une faible distance donnée e de celui-ci, de l'ordre de 1/10^{e} de mm pour quelques milliers de Pa (quelques dizaines de mbar) de différentiel de pressions.

Il se crée alors un débit de fuite donné qui vient réguler et limiter le gonflement de la jupe 12 et permet alors une autorégulation et un équilibre du dispositif d'étanchéité relative ainsi obtenu.

Ce procédé. d'étanchéité se maintient même à plus fort différentiel de pressions, la distance de fuite e augmentant avec celui-ci, jusqu'à 3/10^{e} à 4/10^{e} de mm pour 5.10⁵ Pa (5 bar), et de 14ordre de 1 mm pour 15.10⁵ Pa (15 bar).

L'élément mobile 6 a donc une trajectoire. linéaire suivant la direction F qui ne se trouve pas perturbée, ni par les frottements d'origine mécanique engendrés par les joints à lèvres de l'art antérieur, ni par les efforts latéraux exercés par ces frottements lorsque l'élément mobile 6 tend à se déplacer transversalement, c'est-à-dire perpendiculaire à la direction F, contre eux. L'absence de tels frottements mécaniques préserve également la surface 22 de l'élément mobile 6 ainsi que la jupe 12 du dispositif d'étanchéité 2 selon l'invention.

La distance e obtenue qui sépare la partie 24 de la jupe 12 de la surface 22 de l'élément mobile 6 est fonction de la valeur de l'angle a que forment les moyens de liaison, en l'espèce la ou les bretelles de tenue 20, avec la surface 16 de l'élément fixe 4 et de la différence de pressions entre P₁ et P₂ des premier et second fluides 8 et 10. Cette distance diminue lorsque l'on choisit un angle a plus faible et que le différentiel de pressions P₁- P₂ diminue également.

Le procédé d'étanchéité suivant l'invention permet d'obtenir que le dispositif d'6tanchéité selon l'invention s'auto-positionne dans le volume libre entre les surfaces 16 et 22, même dans l'hypothèse d'un déplacement latéral de l'élément mobile 6.

Dans le cas d'éléments fixe 4 et mobile 6 de section circulaire, la souplesse de la jupe 12 permet de s'adapter aux dimensions et aux déplacements transversaux de l'élément mobile 6 se déplaçant linéairement à l'intérieur de l'élément fixe 4, l'élément mobile 6 pouvant se rapprocher d'un côté vers celui-ci 4 et s'en écarter alors simultanément du côté diamétralement opposé : en effet, on a pu constater que pour une distance D moyenne, par exemple de 80 mm (mais cette distance pouvant être jusqu'à 150 à 200 mm), le dispositif d'étanchéité 2 selon l'invention se déforme et peut continuer à fonctionner dans les conditions du procédé selon l'invention avec une distance D réduite à 20 mm ou au contraire agrandie jusqu'à 140 mm, représentant au moins 40 %, et même jusqu'à 60 à 80 %, de variation de distances possibles.

La figure 2 représente un exemple de réalisation d'un dispositif d'étanchéité 2, 30 selon l'invention comprenant une jupe 12 de section en forme de "U" dont la paroi est une surface continue et étanche et constituée par une membrane 32 renforcée de fibres synthétiques et d'épaisseur constante. L'extrémité 14 de la jupe 12 est destinée à être reliée à la surface d'un élément fixe, mais qui pourrait être celle de l'élément mobile (non représentés dans les deux hypothèses), de façon continue et étanche par un talon 34, en forme par exemple d'un jonc de section en forme de goutte d'eau assurant l'interface de fixation et d'étanchéité avec une pièce de forme complémentaire solidaire de l'élément fixe 4.

L'autre extrémité 18 de la jupe ou membrane 32 comporte :
- d'une part, des échancrures 36 constituant une surface discontinue vers cette extrémité 18 de la membrane 32, cette surface discontinue permettant de laisser échapper le premier fluide 8, qui gonfle depuis l'amont l'intérieur du "U" étanche de la jupe 12, vers l'extérieur de la branche de ce "U" qui fait face à l'élément vers lequel elle se gonfle, sans que la membrane 32 ne vienne en contact avec ledit élément, justement grâce en partie à ce fluide 8 qui fuit alors vers l'aval du dispositif 2,30 selon l'invention par l'espace e qu'il alimente.
- d'autre part, un talon de fixation 38 formé par exemple par un jonc de section en forme de goutte d'eau entrecoupé desdites échancrures 36 et possédant en son centre un trou 40 qui permet de loger des axes de fixation non représenté- sur cette figure.

L'ensemble de ces éléments constituant l'extrémité 18 de la jupe ou membrane 32 constitue la partie auto-adaptative du dispositif d'étanchéité obtenu avec les pièces reliant lesdits axes de fixation à la paroi 16 de l'élément fixe 4, tels que par câbles, bretelles, ensembles mécaniques...

La hauteur H de ce dispositif d'étanchéité et la forme de ses échancrures 36 sont définies en fonction du débit de fuite souhaité, l'objectif étant de ne laisser s'établir qu'un faible débit de fuite d'écoulement de gaz, celui-ci pouvant s'établir à partir de quelques milliers de Pa (quelques dizaines de mbar). Cette hauteur H peut être de quelques dizaines de mm à quelques centaines de cm ; dans le cas de grandes hauteurs, la jupe 12 peut comporter des éléments de fixation 39 dans sa partie arrondie 41, pour maintenir celle-ci en position, même en l'absence de pression intérieure, contre la paroi 16 de l'élément fixe 4 quand celui-ci est disposé verticalement et la partie arrondie 41 vers le haut.

Dans le cas d'un élément fixe 4 dont la paroi 16 est un cylindre de révolution, comme celle 32 de l'élément mobile 6, l'extrémité 18 du dispositif d'étanchéité est disposé suivant un cercle de diamètre dit intérieur et l'extrémité 14 suivant un cercle de diamètre dit extérieur.

Ces extrémités 14, 18 peuvent être de toute forme suivant la forme de la circonférence des éléments fixe 4·et mobile 6 qui se font face : en particulier, si l'élément, qui ne porte pas le dispositif d'étanchéité 2,30 suivant l'invention, comporte des excroissances ou des zones creuses, les parties de l'extrémité 18 de la jupe 12 qui leur font face peuvent être moulées suivant des formes complémentaires et la mise en pression de la jupe 12 suivant le procédé de l'invention maintiendra ces parties d'extrémités 18, sans frottement et à la même distance auto-adaptative de la surface de ces excroissances et/ou zones creuses que pour le reste de la surface de l'élément correspondant.

Bien entendu, l'invention n'est pas limitée au mode de réalisation du dispositif décrit ci-dessus et on peut y apporter des variantes d'exécution en fonction des éléments fixes et mobiles considérés, de leur forme, de leur mode de déplacement relatif, des pièces mécaniques que l'on souhaite réaliser pour fixer le dispositif sur l'invention.

Par exemple, comme déjà indiqué précédemment, le dispositif d'étanchéité selon l'invention peut être solidaire de l'élément mobile 6 et se déplacer avec lui, même si la source de mise en pression du premier fluide est indépendante de cet élément mobile 6 (contrairement du reste à l'utilisation comme des coussins d'air pour la sustentation des mobiles qui alimentent leur propre jupe).

Il peut être également disposé plusieurs dispositifs d'étanchéité 2,30 suivant l'invention, disposés les uns à la suite des autres, dans le sens de déplacement linéaire de l'élément mobile 6 et le long de la surface 16 de l'élément fixe 4 contre laquelle se déplace l'élément mobile 6 : ces dispositifs 2,30 sont parallèles les uns aux autres et chacun d'entre eux ne se met en place que lorsque l'élément mobile 6 arrive à sa hauteur pour que la pression du fluide amont 8 puisse le gonfler vers ledit élément mobile 6 ; après le passage dudit élément mobile 6, le dispositif 2,30 se dégonfle puisqu'il y a alors équipression entre les volumes intérieur et extérieur du "U" formant la jupe 10 12, comme avant le passage de l'élément mobile 6.

## Revendications

1. Dispositif d'étanchéité (2,30) disposé entre les surfaces (16,22) respectives de deux éléments (4,6) constitués par un objet cylindrique (6) et un tube de guidage concentrique (4), l'objet cylindrique (6) étant mobile linéairement dans une direction parallèle à la surface (16) du tube de guidage (4) qui est fixe, ce dispositif d'étanchéité (2,30) étant en forme de « U » renversé dont l'une des branches est ancrée dans la surface de l'un des éléments et dont l'autre branche est libre de se déformer sous l'action de la pression s'exerçant en amont, **caractérisé en ce que** :
le dispositif comprend au moins une jupe (12) souple de section en forme de « U » renversé, dont la surface est continue et dont l'une (14) des extrémités est fixée de manière continue et étanche sur la surface (16,22) d'un desdits éléments (4,6), ladite jupe (12) étant de forme pseudotorique dans la direction perpendiculaire à l'extrémité de la branche du « U » dont l'extrémité est destinée à être fixée à l'un des éléments, la jupe (12) étant apte à être gonflée par un fluide (8) pénétrant par l'ouverture du « U » et à présenter une épaisseur donnée et variable de joint d'étanchéité relative,
l'extrémité (14) de la jupe (12) étant disposée perpendiculairement à la direction de déplacement linéaire de l'élément mobile (6), et l'autre extrémité (18)étant reliée à ladite surface (16,22) dudit élément par des moyens de liaison (20).

2. Dispositif selon la revendication 1, **caractérisé en ce que** la jupe (12) est fixée tangentiellement à la surface (16,22) d'un desdits éléments (4,6) par son extrémité (14).

3. Dispositif selon la revendication 1 ou 2, **caractérisé en ce que** la jupe (12) est fixée à l'élément fixe (4).

4. Dispositif selon l'une quelconque des revendications 1 à 3, **caractérisé en ce que** la jupe (12) est réalisée en élastomère renforcé, la structure interne de renfort étant sous forme de fibres ou tissu, noyées et mouillées par le matériau élastomère monobloc dont les dimensions extérieures déterminent celles de la jupe, la structure interne étant disposée à des distances prédéterminées desdites dimensions extérieures.

5. Dispositif selon l'une quelconque des revendications précédentes, **caractérisé en ce que** la jupe (12) est en polyuréthane renforcé de fibres aramides.

6. Dispositif selon l'une quelconque des revendications précédentes, **caractérisé en ce que** l'épaisseur de la jupe (12) est comprise entre 2 et 5 mm.

7. Procédé d'étanchéité entre les surfaces (16,22) respectives de deux éléments (4,6) constitués par un objet cylindrique (6) et un tube de guidage concentrique (4), l'objet cylindrique (6) étant mobile linéairement dans une direction parallèle à la surface (16) du tube de guidage (4) qui est fixe,
procédé selon lequel on utilise un dispositif d'étanchéité (2,30) en forme de « U » renversé dont l'une des branches est ancrée dans la surface de l'élément fixe et dont l'autre branche est libre de se déformer sous l'action de la pression s'exerçant en amont, ce dispositif d'étanchéité (2,30)étant apte à assurer une étanchéité entre un premier fluide (8) maintenu sous pression du côté amont du dispositif (2,30) et un second fluide (10) situé du côté aval à une pression inférieure, les côtés amont et aval étant définis par rapport au sens de déplacement linéaire de l'élément mobile (6), **caractérisé en ce que** :
on réalise au moins une jupe (12) souple de section en forme de « U » renversé dont la surface est continue,
- on fixe l'une (14) des extrémités de ladite jupe (12) de manière continue et étanche sur la surface (16) de l'un des éléments fixe (4) ou mobile (6),
- on dispose et fixe ladite extrémité (14) de la jupe perpendiculairement à la direction de déplacement linéaire de l'élément mobile, et
- on relie l'autre extrémité (18) de ladite jupe (12) à ladite surface (16) de l'un des éléments par des moyens de liaison (20) aptes à laisser passer le premier fluide (8) à l'intérieur de la forme en « U »,
ladite jupe (12) étant de forme pseudotorique dans la direction perpendiculaire à l'extrémité de la branche du « U » dont l'extrémité est destinée à être fixée à l'un des éléments,
- on gonfle ladite jupe (12) avec le premier fluide (8) sous pression qui pénètre dans l'intérieur de la forme en « U » jusqu'à ce que cette jupe (12) occupe une distance (d) donnée, variable par rapport à la surface (16,22) de l'élément qui lui fait face, et inférieure à la distance (D) séparant les surfaces (16,22) des éléments fixe (4) et mobile (6), laquelle jupe (12) assure une étanchéité relative entre lesdits éléments (4,6),

8. Procédé selon la revendication 7, **caractérisé en ce que** l'on utilise comme premier et second fluides (8,10) du gaz, la jupe (12) se comportant alors suivant le principe du coussin d'air et permettant un débit de fuite de gaz donné.

9. Procédé selon la revendication 7 ou 8, **caractérisé en ce que** l'on définit la distance (e) entre la jupe (12) et l'élément mobile (6) en fonction de la valeur de l'angle (α) que forment les moyens de liaison (20) avec la surface (16) de l'élément fixe (4) et de la différence de pressions entre les fluides amont (8) et aval (10).

10. Procédé selon l'une quelconque des revendications 7 à 9, **caractérisé en ce que** l'on gonfle la jupe (12) avec un différentiel de pression P₁-P₂ de quelques milliers de Pa (quelques dizaines de mbar) pour la mise en place du dispositif d'étanchéité (2,30) relative, ladite jupe (12) occupant une distance (d) inférieure, de deux dixièmes de mm au plus, à celle (D) séparant les surfaces (16,22) de l'élément fixe (4) et mobile (6).

11. Procédé selon l'une quelconque des revendications 7 à 10, **caractérisé en ce que** l'on dispose plusieurs dispositifs d'étanchéité (2,30) le long de la surface (16) de l'élément fixe (4) contre laquelle se déplace l'élément mobile (6), ces dispositifs (2,30) étant parallèles les uns aux autres.

## Claims

1. Sealing device (2, 30) disposed between the respective surfaces (16, 22) of two elements (4, 6) consisting of a cylindrical object (6) and a concentric guide tube (4), the cylindrical object (6) being able to move linearly in a direction parallel to the surface (16) of the guide tube (4) which is fixed, this sealing device (2, 30) being in the form of an inverted "U", one of the arms of which is anchored in the surface of one of the elements and the other arm of which is free to deform under the action of the pressure exerted upstream, **characterised in that**:
the device comprises at least one flexible skirt (12) with a cross section in the shape of an inverted "U", the surface of which is continuous and one (14) of whose ends is fixed continuously and sealingly to the surface (16, 22) of one of the said elements (4, 6), the said skirt (12) being pseudo-toric in shape in the direction perpendicular to the end of the arm of the "U" whose end is intended to be fixed to one of the elements, the skirt (12) being able to be inflated by a fluid (8) entering through the opening of the "U" and to have a given and variable relative seal thickness,
the end (14) of the skirt (12) being disposed perpendicular to the direction of linear movement of the moving element (6), and the other end (18) being connected to the said surface (16, 22) of the said element by connection means (20).

2. Device according to claim 1, **characterised in that** the skirt (12) is fixed tangentially to the surface (16, 22) of one of the said elements (4, 6) by its end (14).

3. Device according to claim 1 or 2, **characterised in that** the skirt (12) is fixed to the fixed element (4).

4. Device according to any one of claims 1 to 3, **characterised in that** the skirt (12) is produced from reinforced elastomer, the internal reinforcing structure being in the form of fibres or fabric, immersed in and wetted by the single-piece elastomer material, the external dimensions of which determine those of the skirt, the internal structure being disposed at distances predetermined from the said external dimensions.

5. Device according to any one of the preceding claims, **characterised in that** the skirt (12) is made from polyurethane reinforced with aramid fibres.

6. Device according to any one of the preceding claims, **characterised in that** the thickness of the skirt (12) is between 2 and 5 mm.

7. Method of sealing between the respective surfaces (16, 22) of two elements (4, 6) consisting of a cylindrical object (6) and a concentric guide tube (4), the cylindrical object (6) being able to move linearly in a direction parallel to the surface (16) of the guide tube (4) which is fixed,
method according to which use is made of a sealing device (2, 30) in the form of an inverted "U", one of the arms of which is anchored in the surface of the fixed element and the other arm of which is free to deform under the action of the pressure exerted upstream, this sealing device (2, 30) being able to provide a seal between a first fluid (8) maintained under pressure on the upstream side of the device (2, 30) and a second fluid (10) situated on the downstream side at a lower pressure, the upstream and downstream sides being defined with respect to the direction of linear movement of the movable element (6), **characterised in that**:
- at least one flexible skirt (12) is produced with a cross section in the form of an inverted "U", the surface of which is continuous,
- one (14) of the ends of the said skirt (12) is fixed continuously and sealingly to the surface (16) of one of the fixed (4) or movable (6) elements,
- the said end (14) of the skirt is disposed and fixed perpendicular to the direction of linear movement of the movable element, and
- the other end (18) of the said skirt (12) is connected to the said surface (16) of one of the elements by connecting means (20) able to allow the first fluid (8) to pass inside the "U" shape,
the said skirt (12) being pseudo-toric in shape in the direction perpendicular to the end of the arm of the "U" whose end is intended to be fixed to one of the elements,
- the said skirt (12) is inflated with the first pressurised fluid (8), which enters inside the "U" shape until this skirt (12) occupies a given distance (d), variable with respect to the surface (16, 22) of the element that faces it, and less than the distance (D) separating the surfaces (16, 22) of the fixed (4) and movable (6) elements, the said skirt (12) providing a relative seal between the said elements (4, 6).

8. Method according to claim 7, **characterised in that** gas is used as the first and second fluids (8, 10), the skirt (12) then behaving according to the air cushion principle and allowing a given gas leakage rate.

9. Method according to claim 7 or 8, **characterised in that** the distance (e) between the skirt (12) and the movable element (6) is defined as a function of the value of the angle (α) formed by the connection means (20) with the surface (16) of the fixed element (4) and the difference in pressures between the upstream (8) and downstream (10) fluids.

10. Method according to any one of claims 7 to 9, **characterised in that** the skirt (12) is inflated with a pressure differential P₁-P₂ of a few thousand Pa (a few tens of mbar) for fitting the relative sealing device (2, 30), the said skirt (12) occupying a distance (d) less, by no more than two tenths of a mm, than that (D) separating the surfaces (16, 22) of the fixed (4) and movable (6) elements.

11. Method according to any of claims 7 to 10, **characterised in that** several sealing devices (2, 30) are disposed along the surface (16) of the fixed element (4) against which the movable element (6) moves, these devices (2, 30) being parallel to each other.

## Patentansprüche

1. Dichtvorrichtung (2, 30), die zwischen den jeweiligen Flächen (16, 22) zweier Elemente (4, 6) angeordnet ist, welche durch ein zylindrisches Objekt (6) und ein konzentrisches Führungsrohr (4) gebildet sind, wobei das zylindrische Objekt (6) linear in einer zu der Fläche (16) des feststehenden Führungsrohres (4) parallelen Richtung bewegbar ist, wobei die Dichtvorrichtung (2, 30) die Form eines umgekehrten "U" aufweist, dessen einer Schenkel in der Fläche eines der Elemente verankert ist, und dessen anderer Schenkel frei ist, um sich unter Einwirkung des stromaufwärts einwirkenden Drucks zu verformen, **dadurch gekennzeichnet, dass**
die Vorrichtung mindestens eine biegsame Schürze (12) mit einem umgekehrt "U"-förmigen Querschnitt aufweist, deren Fläche durchgehend ist und deren eines Ende (14) durchgehend und dicht an der Fläche (16, 22) eines der genannten Elemente (4, 6) befestigt ist, wobei die Schürze (12) senkrecht zu demjenigen Ende des Schenkels des "U", dessen Ende an einem der Elemente angebracht werden soll, pseudotorisch geformt ist, wobei die Schürze (12) geeignet ist, durch ein Fluid (8), das durch die Öffnung des "U" eintritt, aufgeblasen zu werden und eine vorgegebene und variable Dicke der eine relative Dichtigkeit aufweisenden Dichtung zu präsentieren,
wobei das Ende (14) der Schürze (12) senkrecht zur linearen Verschiebungsrichtung des bewegbaren Elements (6) angeordnet ist und das andere Ende (18) mit der genannten Fläche (16, 22) des Elements durch Verbindungseinrichtungen (20) verbunden ist.

2. Vorrichtung nach Anspruch 1, **dadurch gekennzeichnet, dass** die Schürze (12) mit ihrem Ende (14) tangential an der Fläche (16, 22) eines der genannten Elemente (4, 6) angebracht ist.

3. Vorrichtung nach Anspruch 1 oder 2, **dadurch gekennzeichnet, dass** die Schürze (12) an dem festen Element (4) angebracht ist.

4. Vorrichtung nach einem der Ansprüche 1 bis 3, **dadurch gekennzeichnet, dass** die Schürze (12) aus verstärktem Elastomer gebildet ist, wobei die innere Verstärkungsstruktur in Form von Fasern oder Gewebe vorliegt, die/das in den Elastomermaterialblock eingebettet und von diesem benetzt sind/ist, dessen Außenabmessungen diejenigen der Schürze bestimmen, wobei die innere Struktur in vorbestimmten Abständen von den Außenabmessungen angeordnet ist.

5. Vorrichtung nach einem der vorhergehenden Ansprüche, **dadurch gekennzeichnet, dass** die Schürze (12) aus mit Aramidfasern verstärktem Polyurethan besteht.

6. Vorrichtung nach einem der vorhergehenden Ansprüche, **dadurch gekennzeichnet, dass** die Dicke der Schürze (12) zwischen 2 und 5 mm beträgt.

7. Verfahren zum Abdichten zwischen zwei jeweiligen Flächen (16, 22) zweier Elemente (4, 6), welche durch ein zylindrisches Objekt (6) und ein konzentrisches Führungsrohr (4) gebildet sind, wobei das zylindrische Objekt (6) linear in einer zu der Fläche (16) des feststehenden Führungsrohres (4) parallelen Richtung bewegbar ist,
wobei das Verfahren das Verwenden einer Dichtvorrichtung (2, 30) in Form eines umgekehrten "U" vorsieht, dessen einer Schenkel in der Fläche eines der Elemente verankert ist, und dessen anderer Schenkel frei ist, um sich unter Einwirkung des stromaufwärts einwirkenden Drucks zu verformen, wobei die Dichtvorrichtung (2, 30) in der Lage ist, eine Abdichtung zwischen einem druckbeaufschlagten ersten Fluid (8) auf der stromaufwärtigen Seite der Vorrichtung (2, 30) und einem auf der stromabwärtigen Seite befindlichen, einen geringeren Druck aufweisenden zweiten Fluid (10) zu gewährleisten, wobei die stromaufwärtige und die stromabwärtige Seite in bezug auf die Richtung der linearen Verschiebung des bewegbaren Elements (6) definiert sind, **dadurch gekennzeichnet, dass**
- mindestens eine biegsame Schürze (12) mit umgekehrt "U"-förmigem Querschnitt gebildet wird, deren Fläche durchgehend ist,
- eines (14) der Enden der Schürze (12) durchgehend und dicht an der Fläche (16) des feststehenden (4) oder des bewegbaren Elements (6) angebracht wird,
- das genannte Ende (14) der Schürze senkrecht zur linearen Verschiebungsrichtung des bewegbaren Elements angeordnet und angebracht wird, und
- das andere Ende (18) der Schürze (12) mit der Fläche (16) eines der Elemente mittels Verbindungseinrichtungen (20) befestigt wird, welche in der Lage sind, das erste Fluid (8) in das Innere der "U"-Form eintreten zu lassen,
- wobei die Schürze (12) senkrecht zu demjenigen Ende des Schenkels des "U", dessen Ende an einem der Elemente angebracht werden soll, pseudotorisch geformt ist,
- wobei die Schürze (12) mittels des druckbeaufschlagten ersten Fluids (8) aufgeblasen wird, welches in das Innere der "U"-Form eindringt, bis die Schürze (12) eine vorbestimmte Weite (d) innehat, die in bezug auf die ihr Fläche (16, 22) des ihr gegenüberliegenden Elements variabel und geringer als der Abstand (D) ist, der die Flächen (16, 22) des feststehenden (4) und des bewegbare Elements (6) trennt, wobei die Schürze (12) eine relative Dichtigkeit zwischen den Elementen (4, 6) gewährleistet.

8. Verfahren nach Anspruch 7, **dadurch gekennzeichnet, dass** als erstes und zweites Fluid (8, 10) Gas verwendet wird, wobei die Schürze (12) sich somit nach dem Luftkissenprinzip verhält und eine vorbestimmte Gasleckrate ermöglicht.

9. Verfahren nach Anspruch 7 oder 8, **dadurch gekennzeichnet, dass** der Abstand (e) zwischen der Schürze (12) und dem bewegbaren Element (6) in Abhängigkeit von dem Betrag des Winkels (α), den die Verbindungseinrichtungen (20) mit der Fläche (16) des feststehenden Elements (4) bilden, und dem Druckunterschied zwischen dem stromaufwärtigen Fluid (8) und dem stromabwärtigen Fluid (10) definiert.

10. Verfahren nach einem der Ansprüche 7 bis 9, **dadurch gekennzeichnet, dass** die Schürze (12) mit einem Druckunterschied P₁-P₂ von einigen tausend Pa (mehrere zehn mbar) aufgeblasen wird, um die Dichtvorrichtung (2, 30) entsprechend anzuordnen, wobei die Schürze (12) eine Weite (d) einnimmt, die höchstens zwei Zehntel mm kleiner als der Abstand (D) ist, welcher die Flächen (16, 22) des feststehenden (4) und des bewegbaren Elements (6) trennt.

11. Verfahren nach einem der Ansprüche 7 bis 10, **dadurch gekennzeichnet, dass** mehrere Dichtvorrichtungen (2, 30) entlang der Fläche (16) des feststehenden Elements (4), gegenüber welcher sich das bewegbare Element (6) verschiebt, angeordnet werden, wobei diese Vorrichtungen (2, 30) zueinander parallel sind.
